# FASCICULE DE BREVET EUROPEEN

(11) **EP 0 697 600 B1**
(45) Date de publication et mention de la délivrance du brevet: **29.12.1999**
(21) Numéro de dépôt: 95440055.2
(22) Date de dépôt: 17.08.1995
(51) Int. Cl.: G01R 29/08

(54) **Radiomètre pour la détermination d'une température d'un corps par mesure du bruit thermique émis et procédé de mesure mettant en oeuvre ce radiomètre**
Radiometer zur Bestimmung der Temperatur eines Körpers durch Messung des ausgesandten thermischen Rauschens, und Messverfahren, das dieses Radiometer verwendet
Radiometer for determining the temperature of a body by measuring the emitted thermal noise, and measuring method using said radiometer

(30) Priorité: 19.08.1994 FR 9410235
(43) Date de publication de la demande: 21.02.1996
(73) Titulaire: BRUKER SA, 67160 Wissembourg (FR)
(72) Inventeur: Weiss, Michel, 67240 Gries (FR); Martinache, Laurent, 67500 Haguenau (FR); Gonella, Olivier, 67160 Wissembourg (FR)
(74) Mandataire: Nuss, Pierre

(56) Documents cités:
- DE-A- 3 214 974
- FR-A- 2 679 455
- TRANSACTIONS OF THE INSTITUTE OF ELECTRONICS, INFORMATION AND COMMUNICATION ENGINEERS OF JAPAN, vol. E74, no. 5, TOKYO JP, pages 1293-1302, XP 000258516 S. MIZUSHINA E.A. 'NON-INVASIVE TEMPERATURE PROFILING USING MULTI-FREQUENCY MICROWAVE RADIOMETRY IN THE PRESENCE OF WATER-FILLED BOLUS'
- ONDE ELECTRIQUE, vol. 60, no. 12, PARIS FR, pages 30-36, A. MAMOUNI E.A. 'NOUVELLES METHODES DIAGNOSTIQUES FONDEES SUR LA MESURE DU BRUIT THERMIQUE EMIS PAR LES TISSUS VIVANTS'
- MICROWAVE JOURNAL, vol. 26, no. 5, DEDHAM US, pages 196-201, D.V. LAND 'RADIOMETER RECEIVERS FOR MICROWAVE THERMOGRAPHY'

## Description

La présente invention concerne le domaine de l'évaluation quantitative de l'énergie ou de la puissance transportée et déposée par des rayonnements radiofréquence, notamment en vue de la régulation et du contrôle d'un procédé de traitement mettant en oeuvre un chauffage par rayonnement radio-fréquence, en particulier micro-onde, et a pour objet un radiomètre destiné à mesurer le bruit thermique émis par un corps ou une partie d'un corps en vue de déterminer la température moyenne de ce(tte) dernier(e), de manière précise et en continu.

Il existe déjà différents types de radiomètres basés sur le principe de l'évaluation de l'énergie de bruit thermique émis par un corps pour déterminer la température de celui-ci.

Cette évaluation est toujours opérée, dans ces radiomètres connus, en comparant l'énergie du signal de bruit thermique capté par une antenne disposée sur ou dans le corps dont la température doit être déterminée, à l'énergie d'un ou de plusieurs signaux de bruit thermique délivré(s) par au moins une source de référence, dont la ou les températures est (sont) connue(s), ainsi qu'éventuellement à l'énergie du signal réfléchi par un court-circuit radiofréquence.

Toutefois, la prise en compte et l'évaluation des différents signaux précités se fait de manière alternative et cyclique, ce qui ne permet pas d'indiquer de manière continue la température, instantanée du corps considéré. En effet, ces radiomètres existants permettent uniquement d'afficher, avec rafraîchissement de la valeur à intervalles réguliers de plus de 5 secondes généralement, une valeur de la température décalée dans le temps, qui ne correspond pas à la valeur réelle de la température au moment de l'affichage, mais à celle relevée quelques secondes auparavant.

Ces radiomètres n'autorisent pas, par conséquent, un suivi précis et en temps réel de la température, tel qu'il est nécessaire, par exemple, pour la régulation ajustée d'un procédé de traitement par hyperthermie ou thermothérapie micro-onde et où l'occurrence d'un échauffement anormal ou le dépassement d'une valeur seuil doit être repéré(e) le plus rapidement possible, ce qui est rendu relativement délicat du fait des pertes et des dissipations thermiques élevées des tissus vivants.

En outre, ces radiomètres existants ne prennent pas en compte d'éventuelles plages de fréquences polluées par des émissions parasites (radars, four à micro-ondes, radiotéléphones) qui interfèrent ou se superposent aux signaux de bruit thermique à mesurer et faussent par conséquent les mesures de températures basées sur l'évaluation de l'énergie ou de la puissance des signaux captés par l'antenne de mesure.

Par ailleurs, ces radiomètres existants nécessitent des phases de calibration longues et fastidieuses, qu'il est souvent obligatoire de répéter plusieurs fois pour une unique séance de mesures.

Par ailleurs, par le document TRANSACTIONS OF THE INSTITUTE OF ELECTRONICS, INFORMATION AND COMMUNICATION ENGINEERS OF JAPAN, vol. E74, no. 5, Tokyo JP, pages 1293-1302, XP 000258516: S. Mizushina E.A. "Non-invasive temperature profiling using multi-frequency microwave radiometry in the presence of water-filled bolus", on connaît un radiomètre destiné à mesurer le bruit thermique en vue de déterminer la température moyenne d'un corps ou d'une partie d'un corps au moyen d'une antenne de mesure correspondante.

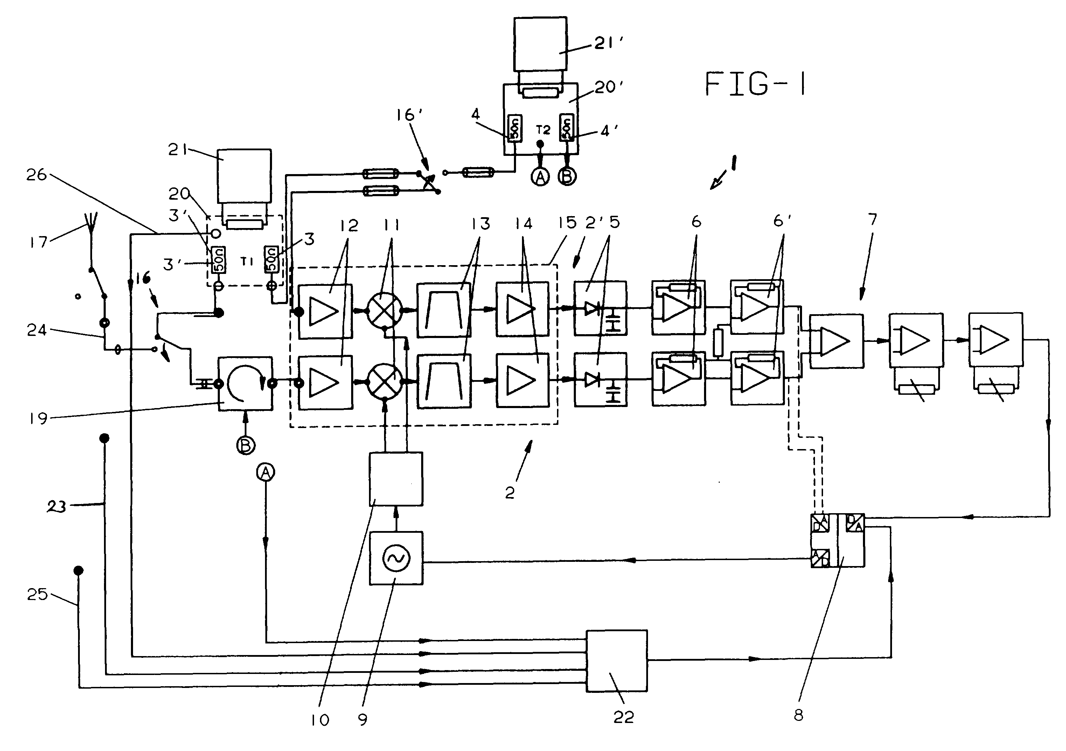

Le radiomètre connu par ce document comporte :
- une double chaîne d'amplification radiofréquence, dont les deux branches sont indépendantes, chacune desdites branches mesurant en alternance un signal délivré par une antenne radiométrique de mesure et un signal de bruit thermique généré par une source de référence respective,
- deux ensembles de circuits convertisseurs disposés à la suite, chacun, de l'une des deux branches de la double chaîne d'amplification radiofréquence et deux ensembles de circuits convertisseurs disposés à la suite, chacun, de l'une des deux branches de la double chaîne d'amplification radiofréquence et délivrant chacun un signal continu dont la valeur est proportionnelle à la valeur de la puissance du signal de bruit thermique issu de la branche associée, lesdits signaux continus étant transmis à une unité de commande, de traitement et d'évaluation, et,
- des moyens de changement de fréquence hétérodyne transposant dans une fenêtre de fréquences plus basse les fréquences des signaux radiofréquence de bruit thermique traités dans les deux branches de la double chaîne d'amplification radiofréquence, les caractéristiques de ladite fenêtre de transposition de fréquences étant déterminées par l'unité de commande, de traitement et d'évaluation et lesdites branches couvrant des plages de fréquences différentes et complémentaires.
Ledit document décrit également un procédé de mesure de la température d'un corps ou d'une partie d'un corps par prise en compte du signal de bruit thermique mettant en oeuvre le radiomètre mentionné ci-dessus, qui consiste, en phase de mesure à prendre en compte en alternance les signaux de bruit thermique délivrés, d'une part, par une antenne radiométrique appliquée sur le corps ou la partie du corps précité(e) (voir figure 1) et, d'autre part, par une source de référence définie, puis à amplifier et à transposer dans deux domaines de fréquences différents, les deux signaux de bruit thermique par l'intermédiaire de deux voies de traitement ou branches indépendantes d'une double chaîne d'amplification radiofréquence, et à extraire ensuite séparément des signaux continus correspondant aux puissances de chacun desdits deux signaux de bruit thermique.

Par conséquent, le radiomètre et le procédé de mesure décrits dans le document précité présentent encore, bien qu'à un degré moindre, les inconvénients des radiomètres existants décrits en introduction à la présente, du fait des mesures en alternance d'un bruit thermique de référence et d'un bruit thermique de mesure.

La présente invention a notamment pour but de pallier cet inconvénient.

A cet effet, elle a pour objet un radiomètre selon la revendication 1 et un procédé de mesure selon la revendication 14.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels:
la figure 1 est un schéma synoptique d'un radiomètre selon l'invention, et,
la figure 2 est un schéma synoptique similaire à celui de la figure 1 représentant une variante de réalisation dudit radiomètre.

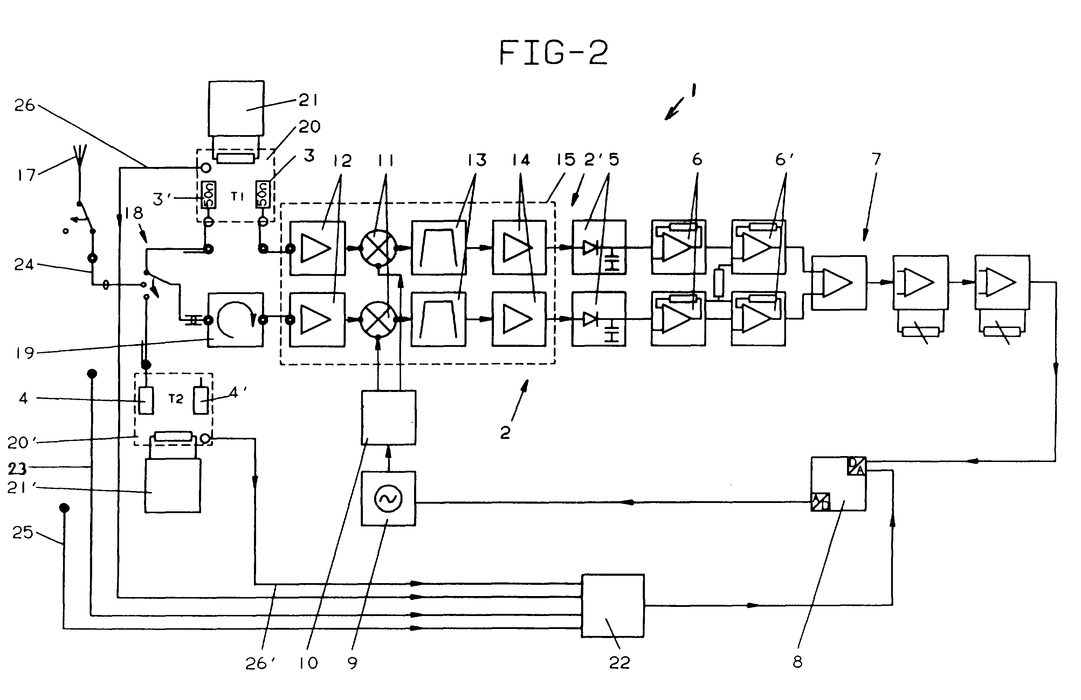

Conformément à l'invention, et comme le montrent les figures 1 et 2 des dessins annexés, le radiomètre est essentiellement constitué , d'une part, par une double chaîne 1 d'amplification radiofréquence, dont les deux branches indépendantes 2 et 2' sont structurellement symétriques, l'une desdites branches 2' mesurant en permanence un signal de bruit thermique généré par une source de référence 3 déterminée, d'autre part, par deux ensembles de circuits convertisseurs 5, 5', 6, 6' identiques disposés à la suite, chacun, de l'une des deux branches 2, 2' de la double chaîne d'amplification radiofréquence 1 et délivrant chacun un signal continu dont la valeur est proportionnelle à la valeur de la puissance du signal de bruit thermique issu de la branche 2 ou 2' associée, lesdits signaux continus étant transmis, directement ou après intégration par une chaîne 7 d'amplification différentielle continue, à une unité 8 de commande, de traitement et d'évaluation, et, enfin, par des moyens 9, 10, 11 de changement de fréquence hétérodyne transposant dans une fenêtre de fréquences plus basse les fréquences des signaux radiofréquence de bruit thermique traités dans les deux branches 2 et 2' de la double chaîne d'amplification radiofréquence 1, les caractéristiques de ladite fenêtre de transposition de fréquences étant déterminées par l'unité 8 de commande, de traitement et d'évaluation, en fonction notamment d'éventuels signaux d'interférence extérieurs.

La branche 2' et l'ensemble de circuits convertisseurs 5', 6' consécutifs traitent par conséquent en permanence un signal de bruit thermique d'une source de référence 3 et délivrent un signal analogique continu dont la valeur peut être comparée en continu à la valeur du signal analogique continu correspondant représentatif du signal de bruit thermique mesurée par l'antenne 17, afin de déterminer la température du corps ou de la partie de corps scrutée par ladite antenne 17 sur la base de ladite comparaison et d'une courbe de régression établie lors de la phase de calibration du radiomètre.

Selon une caractéristique de l'invention, représentée aux figures 1 et 2 des dessins annexés, chaque branche 2, 2' de la double chaîne d'amplification radiofréquence 1 comprend successivement un amplificateur micro-onde 12 à faible facteur de bruit et de grande dynamique, un mélangeur 11 de signaux radiofréquence assurant la transposition fréquentielle des signaux de bruit thermique, un filtre passe-bande 13 adapté à la fenêtre de transposition de fréquence, et un amplificateur 14 large bande et apériodique.

De plus, chaque ensemble de circuits convertisseurs peut comporter avantageusement un détecteur quadratique 5, suivi d'un ou de plusieurs amplificateur(s) continu(s) 6, 6' en cascade.

Conformément à un mode de réalisation préférentiel de l'invention, les amplificateurs continus 6 et 6' en cascade, avantageusement au nombre de deux et faisant partie des ensembles de circuits convertisseurs, et la chaîne d'amplification différentielle continue 7 sont regroupés sous la forme d'un amplificateur d'instrumentation.

Ladite chaîne 7 pourra comporter un amplificateur différentiel suivi d'amplificateurs de réglage du gain et de l'offset.

Afin de limiter au maximum les risques de dérives thermiques et d'interférence radioélectriques et électromagnétiques, pouvant nécessiter respectivement une recalibration du radiomètre et la réalisation d'une nouvelle séance de mesures, du fait d'une erreur systématique sur les valeurs mesurées, la double chaîne d'amplification radiofréquence 1 est entourée d'un blindage électromagnétique 15, éventuellement compartimenté, et est, le cas échéant, disposée dans un contenant ou une enceinte thermorégulée, de même que, éventuellement, les deux ensembles de circuits convertisseurs 5, 6, 6'.

Le blindage électromagnétique 15 évite toute interaction, d'une part, d'un étage du radiomètre sur le suivant ou le précédent et, d'autre part, de la double chaîne d'amplification radiofréquence 1 sur les moyens de changement de fréquence ou réciproquement.

Comme le montrent également les figures 1 et 2 des dessins annexés, les moyens de changement de fréquence hétérodyne sont constitués, d'une part, par un oscillateur 9 pouvant être commandés en fréquence par l'unité 8 de commande, de traitement et d'évaluation ou par une pluralité d'oscillateurs à fréquences fixes différentes pouvant être sélectionnés individuellement par ladite unité 8 de commande, de traitement et d'évaluation, d'autre part, par un diviseur de puissance 10 et, enfin, par deux mélangeurs de signaux radiofréquence 11 intégrés, chacun, dans l'une des branches 2 ou 2' de la double chaîne d'amplification radiofréquence 1.

Ces mélangeurs peuvent être du type actif ou passif et la fenêtre de fréquences basse être située aux alentours de 500 MHz, le filtre passe-bande 13 ayant une bande passante d'environ ± 250 MHz et des pentes relativement abruptes qui déterminent la sélectivité des branches 2 et 2'.

L'oscillateur 9 variable pourra, par exemple, se présenter sous la forme d'un oscillateur du type YIG, VCO ou DRO, piloté par l'unité 8.

Préférentiellement, les circuits d'amplification 14, 6, 6' et 7 situés en aval des mélangeurs 11 sont du type apériodique large bande et présentent une très faible ondulation, afin de transmettre une image des signaux de bruit thermique, la plus fidèle possible.

En outre, chacune des branches 2 et 2' de la double chaîne d'amplification radiofréquence présente un gain d'environ 60 à 70 dB.

Selon une première variante de réalisation de l'invention, représentée à la figure 1 des dessins annexés, chaque entrée de la double chaîne d'amplification radiofréquence 1 est pourvue d'un sélecteur à deux positions 16, 16' permettant d'appliquer, d'une part, à l'une 2' des branches 2, 2', sélectivement, les signaux de bruit thermique issus d'une première 3 ou d'une seconde 4 source de référence, correspondant à des températures différentes et, d'autre part, à l'autre branche 2, sélectivement, le signal de bruit thermique délivré par une source de référence 3' identique à l'une 3 de celles précitées, ou le signal de bruit thermique fourni par une antenne de mesure 17 appliquée sur le corps ou sur la partie d'un corps dont la température doit être déterminée.

Selon une seconde variante de réalisation de l'invention, représentée à la figure 2 des dessins annexés, l'une 2 des branches 2, 2' de la double chaîne d'amplification radiofréquence 1 est munie, au niveau de son entrée, d'un sélecteur à trois positions 18 permettant d'appliquer à ladite branche 2, le signal de bruit thermique d'une première source de référence 3, le signal de bruit thermique d'une seconde source de référence 4, dont le bruit thermique correspond à une température différente de celle de ladite source de référence, ou encore le signal de bruit thermique fourni par une antenne de mesure 17 appliquée sur le corps ou sur la partie de corps dont la température doit être déterminée, l'entrée de l'autre branche 2' de ladite double chaîne d'amplification radiofréquence 1 étant alimentée en permanence par un signal de bruit thermique délivré par une source de référence 3' identique à la première source de référence 3.

En vue d'optimiser le transfert des signaux entre l'antenne 17 et la branche 2 de traitement correspondante de la double chaîne d'amplification radiofréquence 1, il peut être prévu de manière avantageuse de pourvoir l'entrée de ladite branche 2 d'un isolateur 19 permettant de réaliser une adaptation d'impédance au niveau de ladite entrée, la charge dudit isolateur 19 étant constituée par la résistance 4'.

En vue de faciliter la détermination de la température absolue du corps ou de la partie d'un corps, correspondant au bruit thermique capté par l'antenne de mesure 17, et d'en augmenter la précision, il est avantageux que les signaux de bruit thermique fournis par les deux sources de référence 3, 3' et 4 correspondent, l'un à une température inférieure à la valeur minimale de la plage de températures attendue pour le corps ou la partie de corps à mesurer et l'autre, à une température supérieure à la valeur maximale de la plage de températures attendue pour le corps ou la partie de corps à mesurer.

Préférentiellement, la température inférieure de référence sera comprise entre 30°C et 35°C et la température supérieure de référence sera comprise entre 50°C et 55°C, c'est-à-dire situées en dehors de la plage attendue, sans pour autant en être trop éloignées.

Comme le montrent les figures 1 et 2 des dessins annexés, les sources de référence 3, 3' et 4 de signaux de bruit thermique peuvent se présenter sous la forme de charges résistives disposées dans des enceintes respectives 20, 20' chauffées à des températures de consigne différentes et thermorégulées au moyen d'un dispositif d'asservissement 21, 21' propre à chacune desdites enceintes (charges 3 et 3'dans l'enceinte 20; charge 4 dans l'enceinte 20').

La quatrième charge résistive 4' pourra être utilisée en tant que résistance de charge pour l'isolateur 19.

Selon une variante de réalisation de l'invention toutefois, non représentée aux dessins annexés, les sources de référence de signaux de bruit thermique consistent en des diodes à avalanche contrôlée, dont les températures et les tensions appliquées sont régulées.

Afin de pouvoir prendre en compte les différents facteurs de dérive thermique pouvant, le cas échéant, influencer le fonctionnement dudit radiomètre et fausser la détermination de la valeur de la température mesurée, ledit radiomètre pourra également comporter, comme le montrent aussi les figures 1 et 2 des dessins annexés, une unité 22 de contrôle des températures comprenant notamment un capteur de température 23 disposé sur ou à proximité du câble de liaison 24 de l'antenne de mesure 17, un capteur de température 25 relevant la température de l'eau de thermostatisation d'un dispositif de traitement par thermothérapie micro-onde associé éventuellement audit radiomètre, et au moins deux capteurs de température 26 et 26' relevant les températures réelles des enceintes 20, 20' ou des sources de référence 3, 3' et 4 de signaux de bruit thermique, les différentes mesures relevées par ladite unité de contrôle 22 étant transmises à l'unité 8 de commande, de traitement et d'évaluation.

Cette dernière, qui peut par exemple se présenter sous la forme d'une station ou d'un poste informatique du type connu sous la désignation "PC", comprendra bien entendu différents programmes de commande et de contrôle des diverses phases de fonctionnement dudit radiomètre, ainsi qu'un programme de gestion général et de communication avec une unité de traitement par chauffage micro-onde. En outre, ladite unité 8 comportera ainsi des moyens de programmation, de mémorisation et d'édition des résultats existants adaptés.

La constitution spécifique des divers composants, circuits, unités ou analogues dudit radiomètre sont en eux-mêmes connus de l'homme du métier et ne nécessitent pas une description supplémentaire.

La présente invention a également pour objet un procédé de mesure de la température d'un corps, notamment humain, ou d'une partie d'un corps par l'intermédiaire de la prise en compte, de l'acquisition et du traitement du signal de bruit thermique, mettant en oeuvre le radiomètre décrit ci-dessus et consistant, en phase de mesure, à prendre en compte simultanément et en permanence les signaux de bruit thermique délivrés, d'une part, par une antenne radiométrique 17 appliquée sur le corps ou la partie du corps précité(e) et, d'autre part, par une source de référence 3 définie, puis à amplifier et à transposer dans le domaine fréquentiel lesdits deux signaux de bruit thermique précités, ce par l'intermédiaire de deux voies de traitement ou branches 2 et 2' indépendantes et identiques d'une double chaîne d'amplification radiofréquence 1, à extraire ensuite séparément des signaux continus correspondant aux puissances de chacun desdits deux signaux de bruit thermique précités, et, enfin à comparer ces deux signaux continus, analogiquement ou numériquement, pour en déduire, en temps réel, la valeur absolue de la température du corps ou de la partie de corps précité(e), en intégrant différents facteurs de correction.

Conformément à une caractéristique de l'invention, il est prévu, avant la phase de mesure, de calibrer les deux voies de traitement 2 et 2' du radiomètre en appliquant aux entrées desdites voies, alternativement, des signaux de bruit thermique issus de trois sources de référence 3, 3' et 4, dont deux 3 et 3' sont identiques, de manière à pouvoir établir une courbe de régression linéaire pour la détermination de la valeur absolue de la température du corps ou de la partie de corps à analyser, par comparaison de la puissance du signal de bruit thermique capté par l'antenne de mesure 17 avec la puissance du signal de bruit thermique issu de l'une 3 des trois sources de référence 3, 3' et 4.

La calibration du radiomètre comportant deux sélecteurs 16 et 16' à deux positions (Fig. 1) peut se dérouler comme suit: commutation du sélecteur 16 sur la sortie de la source de référence 3' et du sélecteur 16' sur la sortie de la source de référence 3 (température identique à celle de la source 3'); prise en compte et mémorisation de la valeur de la tension différentielle obtenue (point inférieur de la droite de régression et calibration); commutation du sélecteur 16' sur la sortie de la source de référence 4 (température supérieure à celle de la source 3), le sélecteur 16 restant dans sa position précitée; prise en compte et mémorisation de la valeur de tension différentielle obtenue (point supérieur de la droite de régression et de calibration); commutation du sélecteur 16 sur le câble de liaison 24 de l'antenne de mesure 17 et début de la phase de mesure.

Le procédé de calibration est identique dans le cadre de la mise en oeuvre de la seconde variante de réalisation du radiomètre (Fig.2), comprenant un unique sélecteur à trois positions 18 et une branche 2' reliée en permanence à la source de référence 3, ledit sélecteur 18 étant tout d'abord commuté dans une position correspondant à la sortie de la source de référence 3' et, consécutivement, dans une position correspondant à la sortie de la source de référence 4 (détermination des deux points extrêmes de la droite de régression), puis relié au câble de liaison 24 de l'antenne de mesure 17.

En vue de déterminer les fréquences ou plages de fréquences de la bande radiométrique faisant l'objet d'émissions électromagnétiques de forte puissance, susceptibles de perturber les signaux de bruit thermique, le procédé peut consister, avant la phase de mesure, à scruter, par l'intermédiaire d'un changement de fréquence hétérodyne autorisant une transposition des signaux de bruit thermique dans des fenêtres fréquentielles de mesure variables, les différents canaux fréquentiels pouvant être exploités par le radiomètre et à relever les plages ou canaux fréquentiels induisant une différence significative de la valeur finale mesurée par l'antenne radiométrique 17 par rapport aux sources de référence 3, 3', 4 déterminés, le cas échéant identiques 3 et 3', ces canaux fréquentiels étant par la suite exclus dans la mesure et l'évaluation des signaux captés par l'antenne de mesure 17.

Afin de pouvoir également s'affranchir des perturbations aléatoires, qui ne sont pas susceptibles d'être détectées préalablement à la phase de mesure, le procédé peut également consister à détecter , pendant la phase de mesure, les variations de la valeur mesurée correspondant à des élévations trop rapides ou aberrantes de la température, par rapport notamment à la puissance dissipée dans le corps ou la partie de corps au moyen par exemple d'un dispositif de traitement par thermothérapie micro-onde, puis à modifier la fenêtre de transposition fréquentielle et à recalibrer le radiomètre, ces différentes étapes pouvant être réalisées automatiquement par l'unité 8 de commande, de traitement et d'évaluation.

Selon une caractéristique supplémentaire de l'invention, les facteurs de correction pris en compte consistent en l'atténuation des différents câbles de liaison 24, la température ambiante, la température du liquide d'un dispositif de thermostatisation, entourant éventuellement l'antenne de mesure 17 et les variations de température des sources de référence 3, 3', 4.

Compte tenu du blindage électromagnétique 15 et de l'enceinte thermorégulée entourant notamment la double chaîne d'amplification radiofréquence 1, la dérive dudit radiomètre est faible et la recalibration n'est nécessaire en moyenne que deux ou trois fois au cours d'une séance de mesure d'environ 45 mn à 1 heure.

Les différents paramètres de compensation ou facteurs correcteurs sont ajustés une fois pour toutes chez le fabricant en plongeant l'antenne radiométrique 17 dans des bacs à eau portés aux températures limites correspondant aux deux sources de référence 3 et 4 à température différente.

Les longueurs des câbles de liaison 24 alimentent les différents applicateurs ou antennes 17 ayant des longueurs constantes, aucune recalibration n'est nécessaire à cet effet.

Toutefois, en cas de nécessité, un nouveau facteur de correction ou une nouvelle valeur d'un facteur existant pourrait être communiqué(e) à l'unité 8 et mémorisée par cette dernière, par exemple dans le cas d'un changement d'antenne de mesure 17 ou d'applicateur, la nouvelle valeur du facteur de correction ayant été déterminée en usine et indiquée sur ledit nouvel applicateur.

Bien entendu, l'invention n'est pas limitée aux modes de réalisation décrits et représentés aux dessins annexés. Des modifications restent possibles, notamment du point de vue de la constitution des divers éléments, ou par substitution d'équivalents techniques, sans sortir pour autant du domaine de protection de l'invention.

## Revendications

1. Radiomètre destiné à mesurer le bruit thermique en vue de déterminer la température moyenne d'un corps ou d'une partie d'un corps au moyen d'une antenne de mesure correspondante, essentiellement constitué, d'une part, par une double chaîne (1) d'amplification radiofréquence, dont les deux branches indépendantes (2 et 2') sont structurellement symétriques, l'une desdites branches (2') mesurant en permanence un signal de bruit thermique généré par une source de référence (3) déterminée et l'autre (2) desdites branches étant destinée à mesurer simultanément le signal de bruit thermique délivré par une antenne radiométrique (17), d'autre part, par deux ensembles de circuits convertisseurs (5, 5', 6, 6') identiques disposés à la suite, chacun, de l'une des deux branches (2, 2') de la double chaire d'amplification radiofréquence (1) et délivrant chacun un signal continu dont la valeur est proportionnelle à la valeur de la puissance du signal de bruit thermique issu de la branche (2 ou 2') associée, lesdits signaux continus étant transmis, directement ou après intégration par une chaîne (7) d'amplification différentielle continue, à une unité (8) de commande, de traitement et d'évaluation, et, enfin, par des moyens (9, 10, 11) de changement de fréquence hétérodyne transposant dans une fenêtre de fréquences plus basse les fréquences des signaux radiofréquence de bruit thermique traités dans les deux branches (2 et 2') de la double chaîne d'amplification radiofréquence (1), les caractéristiques de ladite fenêtre de transposition de fréquences étant déterminées par l'unité (8) de commande, de traitement et d'évaluation, en fonction notamment d'éventuels signaux d'interférence extérieurs.

2. Radiomètre selon la revendication 1, caractérisé en ce que chaque branche (2, 2') de la double chaîne d'amplification radiofréquence (1) comprend successivement un amplificateur micro-onde (12) à faible facteur de bruit et de grande dynamique, un mélangeur (11) de signaux radiofréquence assurant la transposition fréquentielle des signaux de bruit thermique, un filtre passe-bande (13) adapté à la fenêtre de transposition de fréquence, et un amplificateur (14) large bande et apériodique.

3. Radiomètre selon l'une quelconque des revendications 1 et 2, caractérisé en ce que chaque ensemble de circuits convertisseurs comporte un détecteur quadratique (5), suivi d'un ou de plusieurs amplificateur(s) continu(s) (6, 6') en cascade.

4. Radiomètre selon la revendication 3, caractérisé en ce que les amplificateurs continus (6, 6') en cascade, faisant partie des ensembles de circuits convertisseurs, et la chaîne d'amplification différentielle continue (7) sont regroupés sous la forme d'un amplificateur d'instrumentation.

5. Radiomètre selon l'une quelconque des revendications 1 à 4, caractérisé en ce que la double chaîne d'amplification radiofréquence (1) est entourée d'un blindage électromagnétique (15) éventuellement compartimenté et est, le cas échéant, disposée dans un contenant ou une enceinte thermorégulée, de même que, éventuellement, les deux ensembles de circuits convertisseurs (5, 6, 6').

6. Radiomètre selon l'une quelconque des revendications 1 à 5, caractérisé en ce que les moyens de changement de fréquence hétérodyne sont constitués, d'une part, par un oscillateur (9) pouvant être commandé en fréquence par l'unité (8) de commande, de traitement et d'évaluation ou par une pluralité d'oscillateurs à fréquences fixes différentes pouvant être sélectionnés individuellement par ladite unité (8) de commande, de traitement et d'évaluation, d'autre part, par un diviseur de puissance (10) et, enfin, par deux mélangeurs de signaux radiofréquence (11) intégrés, chacun, dans l'une des branches (2 ou 2') de la double chaîne d'amplification radiofréquence (1).

7. Radiomètre selon l'une quelconque des revendications 1 à 6, caractérisé en ce que chaque entrée de la double chaîne d'amplification radiofréquence (1) est pourvue d'un sélecteur à deux positions (16, 16') permettant d'appliquer, d'une part, à l'une (2') des branches (2, 2'), sélectivement, les signaux de bruit thermique issus d'une première (3) ou d'une seconde (4) source de référence, correspondant à des températures différentes et, d'autre part, à l'autre branche (2), sélectivement, le signal de bruit thermique délivré par une source de référence (3'), identique à l'une (3) de celles précitées ou le signal de bruit thermique fourni par l'antenne de mesure (17) appliquée sur le corps ou sur la partie d'un corps dont la température doit être déterminée.

8. Radiomètre selon l'une quelconque des revendications 1 à 6, caractérisé en ce qu'une (2) des branches (2, 2') de la double chaîne d'amplification radiofréquence (1) est munie, au niveau de son entrée, d'un sélecteur à trois positions (18) permettant d'appliquer à ladite branche (2), le signal de bruit thermique d'une première source de référence (3), le signal de bruit thermique d'une seconde source de référence (4), dont le bruit thermique correspond à une température différente de celle de ladite source de référence, ou encore le signal de bruit thermique fourni par l'antenne de mesure (17) appliquée sur le corps ou sur la partie de corps dont la température doit être déterminée, l'entrée de l'autre branche (2') de ladite double chaîne d'amplification radiofréquence (1) étant alimentée en permanence par un signal de bruit thermique délivré par une source de référence (3') identique à la première source de référence (3).

9. Radiomètre selon l'une quelconque des revendications 1 à 8, caractérisé en ce que l'entrée de la branche (2) de la double chaîne d'amplification radiofréquence (1) susceptible d'être reliée à l'antenne de mesure (17) est pourvue d'un isolateur (19) permettant de réaliser une adaptation d'impédance au niveau de ladite entrée.

10. Radiomètre selon l'une quelconque des revendications 7 à 9, caractérisé en ce que les signaux de bruit thermique fournis par les deux sources de référence (3, 3' et 4) correspondent, l'un à une température inférieure à la valeur minimale de la plage de températures attendue pour le corps ou la partie de corps à mesurer et l'autre, à une température supérieure à la valeur maximale de la plage de températures attendue pour le corps ou la partie de corps à mesurer.

11. Radiomètre selon l'une quelconque des revendications 7 à 10, caractérisé en ce que les sources de référence (3, 3', 4) de signaux de bruit thermique se présentent sous la forme de charges résistives disposées dans des enceintes (20, 20') chauffées à des températures de consigne différentes et thermorégulées au moyen d'un dispositif d'asservissement (21, 21') propre à chacune desdites enceintes.

12. Radiomètre selon l'une quelconque des revendications 7 à 10, caractérisé en ce que les sources de référence de signaux de bruit thermique consistent en des diodes à avalanche contrôlée, dont les températures et les tensions appliquées sont régulées.

13. Radiomètre selon l'une quelconque des revendications 1 à 11, caractérisé en ce qu'il comporte également une unité (22) de contrôle des températures comprenant notamment un capteur de température (23) disposé sur ou à proximité du câble de liaison (24) de l'antenne de mesure (17), un capteur de température (25) relevant la température de l'eau de thermostatisation d'un dispositif de traitement par thermothérapie micro-onde associé éventuellement audit radiomètre, et au moins deux capteurs de température (26 et 26') relevant les températures réelles des sources de référence (3, 3', 4) de signaux de bruit thermique, les différentes mesures relevées par ladite unité de contrôle (22) étant transmises à l'unité (8) de commande, de traitement et d'évaluation.

14. Procédé de mesure de la température d'un corps ou d'une partie d'un corps par prise en compte du signal de bruit thermique, mettant en oeuvre le radiomètre selon l'une quelconque des revendications 1 à 13, consistant, en phase de mesure, à prendre en compte simultanément et en permanence les signaux de bruit thermique délivrés, d'une part, par une antenne radiométrique (17) appliquée sur le corps ou la partie du corps précité(e) et, d'autre part, par une source de référence (3) définie, puis à amplifier et à transposer dans le domaine fréquentiel lesdits deux signaux de bruit thermique précités, ce par l'intermédiaire de deux voies de traitement ou branches (2 et 2') indépendantes et identiques d'une double chaîne d'amplification radiofréquence (1), à extraire ensuite séparément des signaux continus correspondant aux puissances de chacun desdits deux signaux de bruit thermique précités, et, enfin à comparer ces deux signaux continus, analogiquement ou numériquement, pour en déduire, en temps réel, la valeur absolue de la température du corps ou de la partie de corps précité(e), en intégrant différents facteurs de correction.

15. Procédé selon la revendication 14, caractérisé en ce qu'il consiste, avant la phase de mesure, à calibrer les deux voies de traitement (2 et 2') du radiomètre en appliquant aux entrées desdites voies, alternativement, des signaux de bruit thermique issus de trois sources de référence (3, 3', 4), dont deux (3 et 3') sont identiques, de manière à pouvoir établir une courbe de régression linéaire pour la détermination de la valeur absolue de température du corps ou de la partie de corps à analyser par comparaison de la puissance du signal de bruit thermique capté par l'antenne de mesure (17) avec la puissance du signal de bruit thermique issu de l'une (3) des trois sources de référence (3, 3', 4).

16. Procédé selon l'une quelconque des revendications 14 et 15, caractérisé en ce qu'il consiste, avant la phase de mesure, à scruter, par l'intermédiaire d'un changement de fréquence hétérodyne autorisant une transposition des signaux de bruit thermique dans des fenêtres fréquentielles de mesure variables, les différents canaux fréquentiels pouvant être exploités par le radiomètre et à relever les plages ou canaux fréquentiels induisant une différence significative de la valeur finale mesurée par l'antenne radiométrique (17) par rapport aux sources de référence (3, 3', 4) déterminées, le cas échéant identiques (3 et 3').

17. Procédé selon l'une quelconque des revendications 14 et 16, caractérisé en ce qu'il consiste à détecter, pendant la phase de mesure, les variations de la valeur mesurée correspondant à des élévations trop rapides ou aberrantes de la température, par rapport notamment à la puissance dissipée dans le corps ou la partie de corps au moyen par exemple d'un dispositif de traitement par thermothérapie micro-onde, puis à modifier la fenêtre de transposition fréquentielle et à recalibrer le radiomètre.

18. Procédé selon l'une quelconque des revendications 14 à 16, caractérisé en ce que les facteurs de correction pris en compte consistent en l'atténuation des différents câbles de liaison (24), la température ambiante, la température du liquide d'un dispositif de thermostatisation, entourant éventuellement l'antenne de mesure (17) et les variations de température des sources de référence (3, 3', 4).

## Patentansprüche

1. Radiometer bestimmt zur Messung des thermischen Rauschens hinsichtlich der Bestimmung der durchschnittlichen Temperatur eines Körpers oder eines Körperteils mittels einer entsprechenden Meßantenne, das im wesentlichen gebildet ist, einerseits durch eine doppelte Kette (1) zur Hochfrequenzverstärkung, deren beide unabhängigen Zweige (2 und 2') strukturell symmetrisch sind, wobei einer der beiden Zweige (2') permanent ein Signal thermischen Rauschens, erzeugt durch eine bestimmte Bezugsquelle (3), mißt, und der andere (2) der Zweige dazu bestimmt ist, gleichzeitig das durch eine radiometrische Antenne (17) gelieferte Signal thermischen Rauschens zu messen, andererseits durch zwei Anordnungen von identischen, jeweils hintereinander angeordneten Umsetzer-Stromkreisen (5, 5', 6, 6') eines der beiden Zweige (2, 2') der doppelten Kette zur Hochfrequenzverstärkung (1), die jeweils ein fortlaufendes Signal liefern, dessen Wert proportional ist zum Wert der Intensität des Signals thermischen Rauschens, abgegeben von dem verbundenen Zweig (2 oder 2'), wobei die fortlaufenden Signale übertragen werden, direkt oder nach Integration durch eine Kette (7) zur fortlaufenden differentiellen Verstärkung an eine Einheit (8) zur Steuerung, Behandlung und Auswertung, und schließlich durch Mittel (9, 10, 11) zum Wechseln der Überlagererfrequenz, die in ein Fenster mit niedrigerer Frequenz die Frequenzen der Hochfrequenzsignale des thermischen Rauschens, die in den beiden Zweigen (2 und 2') der doppelten Kette zur Hochfrequenzverstärkung (1) behandelt wurden, transponieren, wobei die Merkmale des Fensters zur Frequenztransposition bestimmt sind durch die Einheit (8) zur Steuerung, Behandlung und Auswertung, in Abhängigkeit insbesondere von eventuellen äußeren Interferenzsignalen.

2. Radiometer nach Anspruch 1, dadurch gekennzeichnet, daß jeder Zweig (2, 2') der doppelten Kette zur Hochfrequenzverstärkung (1) nacheinander einen Mikrowellenverstärker (12) mit geringem Rauschfaktor und großer Dynamik, einen Mischer (11) von Hochfrequenzsignalen, der die frequentielle Transposition der Signale thermischen Rauschen gewährleistet, einen Bandpaßfilter (13), der an des Fenster zur Frequenztransposition angepaßt ist, und einen Breitbandund aperiodischen Verstärker (14) aufweist.

3. Radiometer nach einem der Ansprüche 1 und 2, dadurch gekennzeichnet, daß jede Anordnung von Umsetzer-Stromkreisen einen quadratischen Detektor (5), gefolgt von einem oder mehreren kaskadenartig fortlaufenden Verstärker(n) (6, 6') aufweist.

4. Radiometer nach Anspruch 3, dadurch gekennzeichnet, daß die kaskadenartig fortlaufenden Verstärker (6, 6'), die Teil der Anordnungen von Umsetzer-Stromkreisen sind, und die Kette zur fortlaufenden differentiellen Verstärkung (7) in Form eines Verstärkers der instrumentellen Ausrüstung zusammengefaßt sind.

5. Radiometer nach einem der Ansprüche 1 bis 4, dadurch gekennzeichnet, daß die doppelte Kette zur Hochfrequenzverstärkung (1) von einer elektromagnetischen, gegebenenfalls unterteilten Abschirmung (15) umgeben ist, und gegebenenfalls in einem Behälter oder einem thermoregulierten Raum angeordnet ist, ebenso wie, gegebenenfalls die beiden Anordnungen von Umsetzer-Stromkreisen (5, 6, 6').

6. Radiometer nach einem der Ansprüche 1 bis 5, dadurch gekennzeichnet, daß die Mittel zum Wechseln der Überlagererfrequenz gebildet sind, einerseits durch einen Oszillator (9), der in der Frequenz gesteuert werden kann durch eine Einheit (8) zur Steuerung, Behandlung und Auswertung oder durch eine Vielzahl von Oszillatoren mit verschiedenen festen Frequenzen, die individuell durch die Einheit (8) zur Steuerung, Behandlung und Auswertung ausgewählt werden können, andererseits durch einen Intensitätsdivisor (10) und schließlich durch zwei Mischer von Hochfrequenzsignalen (11), die jeweils in einem der Zweige (2 oder 2') der doppelten Kette zur Hochfrequenzverstärkung (1) integriert sind.

7. Radiometer nach einem der Ansprüche 1 bis 6, dadurch gekennzeichnet, daß jeder Eingang der doppelten Kette zur Hochfrequenzverstärkung (1) mit einem Selektor mit zwei Positionen (16, 16') versehen ist, der die Anwendung ermöglicht, einerseits auf den einen (2') der Zweige (2 und 2') selektive der Signale thermischen Rauschens, abgegeben von einer ersten (3) oder einer zweiten (4) Bezugsquelle , entsprechend verschiedener Temperaturen und, andererseits auf den anderen Zweig (2), selektive, des Signals thermischen Rauschens, geliefert von einer Bezugsquelle (3'), die identisch ist mit der einen (3) der oben genannten oder des Signals thermischen Rauschens, geliefert von der Meßantenne (17), angelegt am den Körper oder dem Körperteil, dessen Temperatur bestimmt werden muß.

8. Radiometer nach einem der Ansprüche 1 bis 6, dadurch gekennzeichnet, daß einer (2) der Zweige (2, 2') der doppelten Kette zur Hochfrequenzverstärkung (1) ausgestattet ist, auf Ebene seines Eingangs, mit einem Selektor in drei Positionen (18), der die Anwendung ermöglicht auf den Zweig (2) des Signals thermischen Rauschens einer ersten Bezugsquelle (3), das Signal thermischen Rauschens einer zweiten Bezugsquelle (4), wobei das thermische Rauschen einer Temperatur entspricht, die sich von derjenigen der ersten Bezugsquelle unterscheidet oder noch das Signal thermischen Rauschens, geliefert durch die Meßantenne (17), die am Körper oder dem Körperteil, dessen Temperatur bestimmt werden muß, angelegt wird, wobei der Eingang des anderen Zweigs (2') der doppelten Kette zur Hochfrequenzverstärkung (1) ständig durch ein Signal thermischen Rauschens gespeist wird, geliefert von einer Bezugsquelle (3'), die mit der ersten Bezugsquelle (3) identisch ist.

9. Radiometer nach einem der Ansprüche 1 bis 8, dadurch gekennzeichnet, daß der Eingang des Zweigs (2) der doppelten Kette zur Hochfrequenzverstärkung (1), der mit der Meßantenne (17) verbunden werden kann, mit einem Isolator (19) versehen ist, der eine Anpassung der Impedanz auf Eingangshöhe möglich macht.

10. Radiometer nach einem der Ansprüche 7 bis 9, dadurch gekennzeichnet, daß die Signale thermischen Rauschens, geliefert von den beiden Bezugsquellen (3, 3' und 4) eines einer niedrigeren Temperatur als dem Minimalwert des für den zu messenden Körper oder Körperteil erwarteten Temperaturbereichs und das andere einer höheren Temperatur als dem Maximalwert des für den zu messenden Körper oder Körperteil erwarteten Temperaturbereichs, entsprechen.

11. Radiometer nach einem der Ansprüche 7 bis 10, dadurch gekennzeichnet, daß die Bezugsquellen (3, 3', 4) der Signale thermischen Rauschens sich in Form von resistiven Ladungen darstellen, die in Räumen (20, 20') angeordnet sind, die auf verschiedene Solltemperaturen erhitzt sind, die mittels einer Regelungsvorrichtung (21, 21'), die jedem der Räume eigen ist, thermoreguliert sind.

12. Radiometer nach einem der Ansprüche 7 bis 10, dadurch gekennzeichnet, daß die Bezugsquellen von Signalen thermischen Rauschens aus Lawinendioden mit eingegrenztem Durchbruchsbereich bestehen, wobei die angewandten Temperaturen und Spannungen reguliert sind.

13. Radiometer nach einem der Ansprüche 1 bis 11, dadurch gekennzeichnet, daß es auch eine Einheit (22) zur Temperaturkontrolle, die insbesondere einen Temperatursensor (23) aufweist, der auf oder in der Nähe des Verbindungskabels (24) der Meßantenne (17) angeordnet ist, einen Temperatursensor (25), der die Temperatur des Wassers zur Thermostatisierung einer Vorrichtung zur Behandlung durch Mikrowellen-Thermotherapie, die gegebenenfalls mit dem Radiometer verbunden ist, erhebt, und wenigstens zwei Temperatursensoren (26 und 26') aufweist, die die reellen Temperaturen der Bezugsquellen (3, 3', 4) der Signale thermischen Rauschens erheben, wobei die von der Steuerungseinheit (22) erhobenen, unterschiedlichen Messungen zu der Einheit (8) zur Steuerung, Behandlung und Auswertung übertragen werden.

14. Verfahren zur Messung der Temperatur eines Körpers oder eines Körperteils durch Berücksichtigung des Signals thermischen Rauschens durch Einsatz des Radiometers nach einem der Ansprüche 1 bis 13, das darin besteht, in der Meßphase, gleichzeitig und ständig die gelieferten Signale thermischen Rauschens zu berücksichtigen, einerseits durch eine radiometrische Antenne (17), die auf den oben genannten Körper oder Körperteil angelegt wird und anderseits durch eine bestimmte Bezugsquelle (3), dann im frequentiellen Bereich die beiden oben genannten Signale thermischen Rauschens zu verstärken und zu transponieren, und dies mittels zweier Behandlungswege oder Zweige (2 und 2'), die unabhängig und identisch sind mit einer doppelten Kette zur Hochfrequenzverstärkung (1), dann getrennt fortlaufende Signale, die den Intensitäten jedes der beiden oben genannten Signale thermischen Rauschens entsprechen, zu extrahieren, und schließlich diese beiden fortlaufenden Signale, analog oder numerisch, zu vergleichen, um daraus, in Echtzeit, den absoluten Wert der Temperatur des oben genannten Körpers oder Körperteils, durch Integration verschiedener Korrekturfaktoren, abzuleiten.

15. Verfahren nach Anspruch 14, dadurch gekennzeichnet, daß es darin besteht, vor der Meßphase, die beiden Behandlungswege (2 und 2') des Radiometers zu kalibrieren durch Anwendung an den Eingängen der Wege, alternativ, von Signalen thermischen Rauschens, abgegeben von drei Bezugsquellen (3, 3', 4), wobei zwei (3 und 3') identisch sind, derart daß man eine lineare Regressionskurve für die Bestimmung des absoluten Temperaturwertes des zu analysierenden Körpers oder Körperteils erstellen kann, durch Vergleich der Intensität des Signals des thermischen Rauschens, gefühlt durch die Meßantenne (17) mit der Intensität des Signals thermischen Rauschens, abgegeben von dem einen (3) der drei Bezugsquellen (3, 3' 4).

16. Verfahren nach einem der Ansprüche 14 und 15, dadurch gekennzeichnet, daß es darin besteht, vor der Meßphase, mittels eines Wechsels der Überlagererfrequenz, was eine Transposition der Signale thermischen Rauschens in frequentielle Fenster variabler Messungen ermöglicht, die verschiedenen frequentiellen Kanäle zu prüfen, die durch das Radiometer ausgewertet werden können, und die frequentiellen Bereich oder Kanäle zu erheben, die einen signifikanten Unterschied des Endwerts induzieren, der durch die radiometrische Antenne (17) gemessen wurde, bezüglich der bestimmten, gegebenenfalls identischen (3 und 3') Bezugsquellen (3, 3', 4).

17. Verfahren nach einem der Ansprüche 14 und 16, dadurch gekennzeichnet, daß es darin besteht, während der Meßphase, die Schwankungen des gemessenen Werts aufzudecken, die zu schnellen oder abweichenden Temperaturerhöhungen, bezüglich insbesondere der im Körper oder dem Körperteil vorherrschenden Intensität entsprechen, mittels beispielsweise einer Vorrichtung durch Behandlung durch Mikrowellen-Thermotherapie, dann das Fenster zur frequentiellen Transposition zu verändern und das Radiometer zu rekalibrieren.

18. Verfahren nach einem der Ansprüche 14 bis 16, dadurch gekennzeichnet, daß die berücksichtigten Korrekturfaktoren in der Dämpfung der verschiedenen Verbindungskabel (24), der Umgebungstemperatur, der Temperatur der Flüssigkeit einer Thermostatisierungsvorrichtung, die gegebenenfalls die Meßantenne (17) umgibt, und in den Temperaturschwankungen der Bezugsquellen (3, 3', 4) bestehen.

## Claims

1. A radiometer intended to measure thermal noise for the purposes of determining the mean temperature of a body or a part of a body by means of a corresponding measuring antenna, essentially formed on the one hand by a double radio-frequency amplification chain (1) of which the two independent arms (2, 2') are structurally symmetrical, one of said arms (2') continuously measuring a thermal noise signal generated by a given reference source (3) and the other (2) of said arms being intended to simultaneously measure the thermal noise signal delivered by a radiometric antenna (17). and on the other hand, two identical converter circuit assemblies (5, 5', 6. 6') each disposed following a respective one of the two arms (2. 2') of the double radio-frequency amplification chain (1) and each delivering a continuous signal whose value is proportional to the value of the power of the thermal noise signal issuing from the associated arm (2 or 2'), said continuous signals being transmitted directly or after integration by a continuous differential amplification chain (7) to a command, processing and evaluation chain (8) and finally heterodyne frequency change means (9, 10, 11) transposing into a lower frequency window the frequencies of the thermal noise radio-frequency signals processed in the two arms (2 and 2') of the double radio-frequency amplification chain (1), the characteristics of said frequency transposition window being determined by the control. processing and evaluation unit (8) in dependence in particular on possible external interference signals.

2. A radiometer according to claim 1 characterised in that each arm (2, 2') of the double radio-frequency amplification chain (1) successively comprises a microwave amplifier (12) with a low noise factor and a high dynamic, a radio-frequency signal mixer (11) implementing frequency transposition of the thermal noise signals, a band pass filter (13) adapted to the frequency transposition window, and a wide band and aperiodic amplifier (14).

3. A radiometer according to either one of claims 1 and 2 characterised in that each converter circuit assembly comprises a square-law detector (5) followed by one or more continuous amplifiers (6, 6') in cascade relationship.

4. A radiometer according to claim 3 characterised in that the continuous amplifiers (6, 6') in cascade relationship, forming part of the converter circuit assemblies, and the continuous differential amplification chain (7). are combined in the form of an instrumentation amplifier.

5. A radiometer according to any one of claims 1 to 4 characterised in that the double radio-frequency amplification chain (1) is surrounded by an optionally compartmented electromagnetic screening (15) and if appropriate is disposed in a heat-regulated enclosure or container, and likewise optionally the two converter circuit assemblies (5, 6, 6').

6. A radiometer according to any one of claims 1 to 5 characterised in that the heterodyne frequency change means are formed on the one hand by an oscillator (9) which can be controlled in respect of frequency by the control. processing and evaluation unit (8) or a plurality of oscillators involving different fixed frequencies which can be selected individually by said control. processing and evaluation unit (8), and on the other hand a power divider (10) and finally two radio-frequency signal mixers (11) each integrated into a respective one of the arms (2 or 2') of the double radio-frequency amplification chain (1).

7. A radiometer according to any one of claims 1 to 6 characterised in that each input of the double radio-frequency amplification chain (1) is provided with a selector having two positions (16, 16') permitting application on the one hand to one (2') of the arms (2, 2') selectively of the thermal noise signals from a first reference source (3) or a second reference source (4) corresponding to different temperatures and on the other hand to the other arm (2) selectively of the thermal noise signal delivered by a reference source (3') identical to one (3) of said reference sources or the thermal noise signal supplied by the measuring antenna (17) applied to the body or to the part of a body whose temperature is to be determined.

8. A radiometer according to any one of claims 1 to 6 characterised in that one (2) of the arms (2, 2') of the double radio-frequency amplification chain (1) is provided at the level of its input with a three-position selector (18) permitting application to said arm (2) of the thermal noise signal from a first reference source (3), the thermal noise signal from a second reference source (4) whose thermal noise corresponds to a temperature different from that of said reference source, or the thermal noise signal supplied by the measuring antenna (17) applied to the body or to the part of the body of which the temperature is to be determined, the input of the other arm (2') of said double radio-frequency amplification chain (1) being permanently fed by a thermal noise signal delivered by a reference source (3') which is identical to the first reference source (3).

9. A radiometer according to any one of claims 1 to 8 characterised in that the input of the arm (2) of the double radio-frequency amplification chain (1) which is capable of being connected to the measuring antenna (17) is provided with an insulator (19) permitting impedance adaptation to the level of said input.

10. A radiometer according to any one of claims 7 to 9 characterised in that the thermal noise signals produced by the two reference sources (3, 3' and 4) correspond one to a temperature which is less than the minimum value of the range of temperatures which is expected for the body or the part of the body to be measured and the other to a temperature which is higher than the maximum value of the range of temperatures which is expected for the body or the part of the body to be measured.

11. A radiometer according to any one of claims 7 to 10 characterised in that the reference sources (3. 3', 4) of thermal noise signals are in the form of resistive loads disposed in enclosures (20, 20') which are heated to different reference temperatures and which are heat-regulated by means of a control device (21, 21') specific to each of said enclosures.

12. A radiometer according to any one of claims 7 to 10 characterised in that the thermal noise signal reference sources consist of controlled-avalanche diodes of which the applied voltages and temperatures are regulated.

13. A radiometer according to any one of claims 1 to 11 characterised in that it also comprises a unit (22) for monitoring temperatures comprising in particular a temperature sensor (23) disposed on or in the proximity of the connecting cable (24) of the measuring antenna (17), a temperature sensor (25) for detecting the temperature of the thermostatic control water of a microwave thermotherapy treatment device possibly associated with said radiometer, and at least two temperature sensors (26 and 26') for detecting the real temperatures of the thermal noise signal reference sources (3, 3', 4), the different measurements detected by said monitoring unit (22) being transmitted to the control, processing and evaluation unit (8).

14. A process for measuring the temperature of a body or a part of a body by taking account of the thermal noise signal, using the radiometer according to any one of claims 1 to 13, comprising, in a measuring phase, simultaneously and continuously taking into account the thermal noise signals delivered on the one hand by a radiometric antenna (17) applied to said body or said part of the body and on the other hand a defined reference source (3), and then amplifying and transposing into the frequency domain said two thermal noise signals, by way of two independent and identical processing paths or arms (2 and 2') of a double radio-frequency amplification chain (1), then separately extracting continuous signals corresponding to the powers of each of said two thermal noise signals and finally comparing said two continuous signals in analog or digital mode in order to deduce therefrom in real time the absolute value of the temperature of said body or said part of the body. with integration of different correction factors.

15. A process according to claim 14 characterised in that it comprises prior to the measuring phase calibrating the two processing paths (2 and 2') of the radiometer by applying to the inputs of said paths alternately thermal noise signals from three reference sources (3, 3', 4) of which two (3 and 3') are identical so as to be able to establish a linear regression curve for determining the absolute value of the temperature of the body or the part of the body to be analysed by comparison of the power of the thermal noise signal detected by the measuring antenna (16) with the power of the thermal noise signal from one (3) of the three reference sources (3, 3', 4).

16. A process according to any one of claims 14 and 15 characterised in that it comprises prior to the measuring phase scanning by way of a heterodyne frequency change authorising transposition of the thermal noise signals into variable frequency measurement windows the different frequency channels which can be used by the radiometer and detecting the frequency channels or ranges inducing a significant difference in the final value measured by the radiometric antenna (17) with respect to the given reference sources (3, 3', 4) which if necessary are different (3 and 3').

17. A process according to either one of claims 14 and 16 characterised in that it comprises detecting during the measuring phase the variations in the measured value corresponding to excessively rapid or abnormal rises in temperature, with respect in particular to the power dissipated in the body or the part of the body by means for example of a microwave thermotherapy treatment device. then modifying the frequency transposition window and recalibrating the radiometer.

18. A process according to any one of claims 14 to 16 characterised in that the correction factors taken into account consist of the attenuation effect of the different connecting cables (24), ambient temperature, the temperature of the liquid of a thermostatic control device possibly surrounding the measuring antenna (17) and the variations in temperature of the reference sources (3, 3', 4).
